Europäisches Patentamt

European Patent Office

Office européen des brevets

(19)

(11) Veröffentlichungsnummer : **0 110 208**
**B1**

(12) # EUROPÄISCHE PATENTSCHRIFT

(45) Veröffentlichungstag der Patentschrift :
05.03.86

(51) Int. Cl.⁴ : **C 10 L   5/40**

(21) Anmeldenummer : **83111209.9**

(22) Anmeldetag : **10.11.83**

(54) **Verfahren zur Aufbereitung von Abwasserklärschlamm.**

(30) Priorität : **26.11.82 DE 3243827**

(43) Veröffentlichungstag der Anmeldung :
**13.06.84 Patentblatt 84/24**

(45) Bekanntmachung des Hinweises auf die Patenterteilung : **05.03.86 Patentblatt 86/10**

(84) Benannte Vertragsstaaten :
**AT BE CH FR GB LI NL SE**

(56) Entgegenhaltungen :
**AT-A-   368 545**
**DE-B- 1 145 646**
**GB-A- 1 198 958**

(73) Patentinhaber : **Müller, Dietrich, Dr.**
**Handelmannweg 1**
**D-2000 Hamburg 52 (DE)**

(72) Erfinder : **Müller, Dietrich, Dr.**
**Handelmannweg 1**
**D-2000 Hamburg 52 (DE)**

(74) Vertreter : **UEXKÜLL & STOLBERG Patentanwälte**
**Beselerstrasse 4**
**D-2000 Hamburg 52 (DE)**

Jouve, 18, rue St-Denis, 75001 Paris, France

## Beschreibung

Die Erfindung betrifft ein Verfahren zur Aufbereitung von insbesondere ausgefaultem Abwasserklärschlamm durch Vermischen desselben mit zerkleinertem organischem Material und anschließendem Verpressen zu Brennziegeln.

Die Beseitigung von Abwasserklärschlamm ist insbesondere für die Stadtentwässerung mit erheblichen Schwierigkeiten verbunden. Die bislang geübte deponierende Einbringung von Klärschlamm in das Meer, die sogenannte Schlammverklappung, ist nicht nur wegen der Transportkosten unwirtschaftlich, sondern aus Gründen der Umweltverschmutzung nur noch in begrenztem Rahmen möglich.

Die Aufbereitung von Abwasserklärschlamm zur Gewinnung verwertbarer Endprodukte oder schadloser Bestandteile stellt insbesondere in Großstädten ein erhebliches Problem dar. Es ist zwar bekannt, Abwasserklärschlamm zur Gewinnung von Methan ausfaulen zu lassen oder zu lagern, was jedoch erhebliche Kosten hinsichtlich der Lagerbehälter erfordert, wobei die Beseitigung des ausgefaulten Klärschlammes nach wie vor ein Problem darstellt. Auch die Verwendung von eingedicktem Klärschlamm als Bodenverbesserungsmittel ist wegen der geringen Konzentration an düngewirksamen Substanzen problematisch.

Es ist ferner bekannt, den Klärschlamm oder den ausgefaulten Klärschlamm mit einem Feststoffgehalt von etwa 2 bis 5 % in Absetzbecken einzudicken, bis ein Feststoffgehalt von etwa 10 Gew. % erreicht wird. Anschließend kann der vorentwässerte oder eingedickte Schlamm mit Zentrifugen bzw. Filterpressen bis zu einem Feststoffgehalt von etwa 30 bis 50 Gew. % weiter eingedickt werden. Sowohl die Schlammeindickung in Absetzbecken als auch die Entwässerung durch Zentrifugen und Filterpressen ist äußerst unwirtschaftlich, zumal die endgültige Schlammtrocknung auf einen Restwassergehalt unter 50 % einen erheblichen Energieeinsatz erfordert und letztlich nicht zu einer Beseitigung des getrockneten Restschlammes führt.

Es ist zwar aus der DE-B 1 145 646 ein Verfahren bekannt, bei dem geraspelter Stadtmüll mit Klärschlamm zu Preßlingen verformt wird, um diese Preßlinge als Bodenverbesserungsmittel einzusetzen, wobei noch erwähnt wird, daß im Falle einer Überproduktion derartiger Bodenverbesserungsmittel diese mit einem Heizwert bis zu 8 372 · 10³ J/kg (2 000 kcal/kg) ohne Schwierigkeiten und insbesondere ohne den Einsatz kostspieliger Müllverbrennungsöfen verbrannt werden können.

Die vorliegende Erfindung hat sich die Aufgabe gestellt, Abwasserklärschlamm und insbesondere ausgefaulten Abwasserklärschlamm durch Vermischen mit organischem Material und anschließendem Verpressen derart aufzubereiten, daß Brennziegel mit einem hohen Brennwert entstehen, die unter Vermeidung umweltschädlicher Nebenprodukte einer sinnvollen Nutzung zugeführt werden können.

Zur Lösung dieser Aufgabe wird daher ein Verfahren der eingangs geschilderten Art vorgeschlagen, das dadurch gekennzeichnet, daß man den Abwasserklärschlamm mit zerkleinertem, getrocknetem Herbstlaub oder dem Extraktionsrückstand solchen Herbstlaubes versetzt.

Überraschenderweise hat sich nämlich gezeigt, daß man getrocknetes gemahlenes Herbstlaub oder den Extraktionsrückstand solchen Herbstlaubes hervorragend einsetzen kann, um einmal den Abwasserklärschlamm zu sedimentieren und ferner bei Zusatz von größeren Mengen plastisch verformbare Massen erhält. Letzteres ist vermutlich auf die besondere Struktur des Blattmaterials zurückzuführen, die auch die gute Bindung von Ballastwasser aus dem Klärschlamm oder Baggerschlamm bewirkt und eine bessere Abtrocknung der Brennziegel begünstigt, die einen erheblichen Brennwert von etwa 17 399,8 · 10³ J/kg (4 300 kcal/kg) haben. Zusätzlich liefert die Achse dieser Brennziegel dünemittelwirksame Substanzen in erheblicher Konzentration.

Es ist bereits in der gleichzeitig angemeldeten EP-A-0 111 732 vorgeschlagen worden, das in erheblichen Mengen anfallende Herbstlaub zur Gewinnung von Rohstoffen zu zerkleinern und zu trocknen und ein- oder mehrstufig zu extrahieren, wobei man aus den Extrakten wertvolle Inhaltsstoffe isolieren und den Rückstand als Brennstoff einsetzen kann. Sowohl das zerkleinerte oder gemahlene Blatt des Herbstlaubes als auch der Rückstand nach dessen Extraktion sind besonders gut geeignet, Ballastwasser aus Klärschlamm zu binden, wobei im allgemeinen 1 Gew.-Teil gemahlenes Blattgut je 3 bis 6 Gew.-Teile Klärschlamm bzw. 1 Gew.-Teil Extraktionsrückstand aus gemahlenem Blattgut je 6 bis 10 Gew.-Teile Klärschlamm, jeweils bezogen auf einen Klärschlamm mit 10 Gew. % Feststoffgehalt geeignet sind, aus dem Klärschlamm eine plastisch verformbare Masse zu erhalten, die dann nach Trocknen als Brennziegel oder als Briketts eingesetzt werden können. Klärschlamm mit geringerem bzw. höherem Feststoffgehalt bedingt höhere bzw. geringere Mengen Laubzusatz, um dessen Ballastwasser zu binden.

Bei einem besonders bevorzugten Verfahren wird der Abwasserklärschlamm stufenweise mit dem Herbstlaub oder dessen Extraktionsrückstand versetzt, wobei man den Abwasserklärschlamm vor dieser Zugabe oder vor einer Teilzugabe zumindest teilweise von Wasser befreien kann. Beispielsweise kann man einen in Absetzbecken bereits eingedickten Schlamm mit dem zerkleinerten und getrockneten Herbstlaub oder dessen Extraktionsrückstand versetzen. Zum anderen ist es auch möglich, vorher unbehandelten oder einen bereits bis etwa 15 % Feststoffgehalt eingedickten Schlamm mit dem Herbstlaub oder dessen Extraktionsrückstand in kleineren Anteilen zu versetzen und nach Sedimentation der Festteile weiteres Wasser zu entziehen, um dann durch weiteren Zusatz von Herbstlaub oder dessen Extraktionsrückstand eine plastisch verformbare Masse herzustellen.

Es ist ferner überraschend, daß das zerkleinerte getrocknete Herbstlaub bzw. dessen Extraktionsrückstand dem großen Wasserbindungsvermögen von Klärschlamm entgegenwirken kann und daß ferner der eingedickte Klärschlamm die Mischung zu einer zusammenhaftenden plastischen Masse verbindet. Es ist ferner überraschend, daß die so erhaltenen verformbaren Massen sich leicht brikettieren und relativ schnell an Luft trocknen lassen ; und zwar bis zu Restfeuchten von etwa 4 %, während ohne Laubzusatz die Abtrocknung des Klärschlamms allein bis etwa 14 % stehen bleibt.

Durch das erfindungsgemäße Verfahren liefert der an sich schwer zu handhabende und auch aufwendig verbrennbare Klärschlamm durch den Zusatz von zerkleinertem getrocknetem Herbstlaub oder dessen Extraktionsrückstand eine erhebliche Anreicherung an brennbarem Material, wobei der Klärschlammanteil rund 13 814 J/kg (3 300 kcal/kg) Trockensubstanz und der Herbstlaubanteil rund 20 930 J/kg (5 000 kcal/kg) betragen.

Die erhaltenen Brennziegel brennen etwa wie Braunkohlebriketts ab. Der Aschegehalt ist aufgrund des Klärschlammanteils verhältnismäßig hoch, enthält jedoch eine Reihe anorganischer wasserlöslicher Salze und insbesondere Kalium, Stickstoff und Phosphor enthaltende Verbindungen, die bei entsprechender Weiterverarbeitung und nach Abtrennung von noch vorhandenen Schwermetallen zu Düngezwecken eingesetzt werden können.

Im folgenden soll die Erfindung anhand von Beispielen näher erläutert werden.

Beispiel 1

Gefallenes gemischtes Herbstlaub verschiedener Straßenbäume, das an einem regnerischen Tage einem Raumfahrzeug der Stadtreinigung einer deutschen Großstadt entnommen worden war, wurde innerhalb von 48 Stunden unter Dach abgetrocknet, wobei 62,5 Gew. % Wasser entfernt wurden. Dieses Material wurde auf etwa 1/25 seines Ausgangsvolumens zerkleinert.

4 000 g eines städtischen Klärschlammes mit 10 Gew. % Feststoffgehalt wurden mit 871 g des getrockneten und zerkleinerten Herbstlaubes durchmischt und in einem Knetwerk in eine plastische Masse überführt. Die plastische Masse wurde zu Brennziegeln verarbeitet, die an der Luft getrocknet wurden. Diese Briketts brannten mit gelber Flamme und ergaben umgerechnet einen Brennwert von etwa 18 000 J/kg (4 300 kcal/kg).

Beispiel 2

Zerkleinertes getrocknetes Herbstlaub wurde gemäß EP-A-0 111 732 dreistufig mit Aceton/Methanol/Wasser extrahiert, und der Extraktionsrückstand an Luft getrocknet. 4 000 g eines Klärschlammes gemäß Beispiel 1 wurden mit 485 g dieses Extraktionsrückstandes von getrocknetem Herbstlaub verarbeitet, bis eine formbare Mischung erhalten wurde. Aus dieser knetbaren Masse wurden Würfel geformt, die auf eine Restfeuchte von etwa 4 % abgetrocknet wurden. Probewürfel mit einem Gewicht von etwa 2 g konnten über einer mittelstarken Bunsenflamme in einem Porzellantiegel verbrannt werden, wobei die Brikettmasse nach 45 Sekunden zündete und etwa 3 Minuten lang mit gelber Flamme abbrannte. Die Asche wurde mit kaltem Wasser ausgelaugt, wobei 21,4 % wasserlösliche Anteile erzielt wurden, die 0,35 mg/l Phosphor, 20 mg/l $NO_3$ und 100 mg/l Kalium sowie 8 mg/l $NH_4$ neben Schwermetallen enthielten.

Beispiel 3

In einen Absatzbehälter mit etwa 250 ml ausgefaultem Klärschlamm und einem Feststoffgehalt von etwa 3 Gew. % wurden etwa 20 % der erforderlichen Menge, nämlich 12 g getrocknetes zerkleinertes Herbstlaub eingerührt, wobei eine verhältnismäßig schnelle Sedimentation der Trübstoffe nach etwa 4 Stunden beobachtet werden konnte. Die verhältnismäßig klare wässrige Flüssigkeit wurde dekantiert bzw. abgesogen, worauf die restliche Menge an getrocknetem Herbstlaub, nämlich 48 g eingerührt wurde, bis sich eine knetbare Masse ergab, die dann zu Ziegeln oder Briketts verarbeitet und an der Luft getrocknet wurde.

Als Klärschlamm können bei dem erfindungsgemäßen Verfahren sowohl der bei Klärwerken anfallende Klärschlamm aus der Abwasserbehandlung als auch andere Wasserschlämme, wie beispielsweise die bei der Fluß- oder Hafenreinigung anfallenden Baggerschlämme verwendet werden.

**Patentansprüche**

1. Verfahren zur Aufbereitung von insbesondere ausgefaultem Abwasserklärschlamm durch Vermischen desselben mit zerkleinertem organischem Material und anschließendem Verpressen zu Brennziegeln, dadurch gekennzeichnet, daß man den Abwasserklärschlamm mit zerkleinertem, getrocknetem Herbstlaub oder dem Extraktionsrückstand solchen Herbstlaubes versetzt.

2. Verfahren nach Anspruch 1, dadurch gekennzeichnet, daß man den Abwasserklärschlamm vor der Zugabe des gesamten Herbstlaubes bzw. dessen Extraktionsrückstandes oder nach einer Teilzugabe dieser auf an sich bekannte Weise von einem Teil Wasser befreit.

3. Verwendung der aus den Brennstoffziegeln nach Abbrennen erhaltenen Asche als Düngemittelkomponente.

## Claims

1. Process for the treatment of in particular digested sewage sludge by mixing it with comminuted organic material and compressing to fuel briquettes, characterized in that comminuted dried autumn foliage or the extraction residue of such autumn foliage is added to the sewage sludge.

2. Process according to claim 1, characterized in that prior to the addition of the total autumn foliage or its extraction residue, respectively, or after a partial addition, thereof, part of the water is removed from the sewage sludge in per se known manner.

3. Use of the ash obtained after burning the fuel briquettes as a fertilizer component.

## Revendications

1. Procédé de conditionnement de boues de clarification d'eaux usées, notamment putréfiées, par mélange de celles-ci avec une matière organique hachée et ensuite par compression sous forme de briquettes combustibles, caractérisé en ce que l'on mélange la boue de clarification d'eaux usées avec une masse formée de feuillage d'automne haché et séché ou bien avec le résidu d'extraction d'un tel feuillage d'automne.

2. Procédé selon la revendication 1, caractérisé en ce que, avant l'addition de la totalité de la masse du feuillage d'automne ou de son résidu d'extraction, ou bien après une addition partielle de celui-ci, on libère la boue de clarification d'eaux usées d'une partie de l'eau en opérant d'une manière connue.

3. Utilisation des cendres obtenues après combustion des briquettes combustibles sous la forme de composants d'engrais.